Europäisches Patentamt

European Patent Office

Office européen des brevets

(11) Veröffentlichungsnummer: **0 508 175 A2**

## EUROPÄISCHE PATENTANMELDUNG

(21) Anmeldenummer: **92104745.2**

(22) Anmeldetag: **19.03.92**

(51) Int. Cl.5: **H02G 3/10**

(30) Priorität: **09.04.91 DE 4111470**

(43) Veröffentlichungstag der Anmeldung:
**14.10.92 Patentblatt 92/42**

(84) Benannte Vertragsstaaten:
**AT BE CH ES FR IT LI NL PT**

(71) Anmelder: **OBO Bettermann OHG**
**Hüingser Ring 52**
**W-5750 Menden 2(DE)**

(72) Erfinder: **Jordan, Ernst Günter, Ing. grad.**
**Oberm Rolande 98**
**W-5750 Menden 2(DE)**

(74) Vertreter: **Köchling, Conrad-Joachim et al**
**Patentanwälte Dipl.-Ing. Conrad Köchling,**
**Dipl.-Ing. Conrad-Joachim Köchling Fleyer**
**Strasse 135**
**W-5800 Hagen 1(DE)**

(54) **Elektrotechnische Abzweigdose zur Aufputz-Installation.**

(57) Um eine elektrotechnische Abzweigdose mit einem quaderförmigen Bodenteil, auswechselbaren Wandungsteilen sowie einem Deckel, wobei die auswechselbaren Wandungsteile gleiche oder unterschiedliche Einführ- bzw. Dichtelemente zur Durch- und Einführung von Installations - material aufweisen, zu schaffen, die bei einer geringen Anzahl von zu fertigenden Teilen eine hohe Anwendungsvielfalt ermöglicht, insbesondere auch unterschiedliche Höhenausbildung der Seitenwände der Dose gestattet, wird vorgeschlagen, daß das Bodenteil (1) in den Eckbereichen, parallel zu den Wandungsteilen (2) abragende Dome (4) aufweist, die auswechselbaren Wandungs teile (2) jeweils die gesamte Seitenwandung vom Bodenteil (1) bis zum Deckel (3) umfassen und an einer Seitenrandkante eine zylindrische, auf einen Dom (4) aufsteckbare Hülse (5) und an der anderen Seitenrandkante eine im Querschnitt mindestens etwa einen Viertelkreis bildende Führung (6) aufweisen, die auf eine auf einem Dom (4) aufgeschobene Hülse (5) des benachbarten Wandungsteiles (2) aufschiebbar ist.

Fig. 2

Die Erfindung betrifft eine elektrotechnische Abzweigdose zur Aufputz-Installation, bestehend aus einem quaderfömigen Bodenteil, auswechselbar am Bodenteil gehalterten Wandungsteilen sowie einem auf die Stirnseite der Wandungsteile aufsetzbaren, am Bodenteil befestigbaren Deckel, wobei die zusammenfügbaren Teile (Wandungsteile, Deckel) ohne Dichtung, mit eingelegten Dichtungen oder mit angeformten Dichtungen ausgestattet sind und die auswechselbaren Wandungsteile gleiche oder unterschiedliche Einführ- bzw. Dichtelemente zur Durch- und Einführung von Kabeln und dergleichen Installationsmaterial aufweisen.

Derartige Abzweigdosen sind im Stand der Technik vielfach bekannt.

Es ist auch üblich, daß solche Abzweigdosen an den Verbindungsstellen zwischen Deckel, Wandungsteilen und Bodenteil mit Dichtungen abgedichtet werden, um auch eine Anwendung in feuchten Räumen zu gewährleisten.

Bei dem Einsatz von Dichtungen ist es möglich, diese als separate Elemente vorzusehen, oder aber die Dichtungen einstückig an Teile der Abzweigdose anzuspritzen, sofern beide Teile aus Kunststoff geeigneter Konsistenz bestehen. Grundsätzlich ist die hier betroffene Abzweigdose vorzugsweise aus Kunststoff gefertigt.

Eine Abzweigdose der Gattung, wie sie im Oberbegriff beschrieben ist, ist aus der DE-PS 941 734 bekannt. Dabei ist der Boden einstückig mit den Seitenwänden geformt, die Seitenwände weisen aber zum Deckel hin offene, und zum Boden torbogenartig geformte Ausnehmungen auf, in welche Seitenwandteil-Einsätze mit profilierten Gummidichtungen eingebracht werden können. Hieraus ergibt sich der Vorteil, daß verschiedenartige Seitenteileinsätze für unterschiedliche Leitungseinführungen bei gleicher Größe und Ausführung der Abzweigdose eingesetzt werden können.

Allerdings ist das Grundmaß der Abzweigdose festgelegt, so daß für unterschiedliche Höhenabmessungen unterschiedliche Bodenteile samt Seitenwandteilen einstückig gefertigt werden müssen, die dann mit den entsprechenden Seitenwandausschnitten komplettiert werden können.

Aus der DE 39 20 964 A1 ist eine Abzweigdose bekannt, bei der am Boden Wandungsteile in halber Höhe der kompletten Seitenwandung angeformt sind, die den halben Ausschnitt der entsprechenden Kabeleinführung oder dergleichen aufweisen. Diese Teile werden mit einem Rahmenteil komplettiert, welche die weitere Halbkreisform der Kabeleinführung aufweist und die Wandungsteile zu voller Höhe ergänzt. Zudem ist dort auch ein Deckel als Abschluß der Dose vorgesehen. Zur Anordnung der Deckelbefestigungsschrauben sind in den Eckbereichen am Bodenteil und an dem Zwischenrahmen hülsenartige, ineinsteckbare Elemente vorgesehen, die von der Befestigungsschraube durchgriffen sind.

Bei dieser Dose ist eine Variation der Kabeleinlässe nicht möglich, sondern nach der Fertigung der Dose ist diese Dose nur für den bestimmten Einsatzzweck brauchbar, so daß für unterschiedliche Einführungen unterschiedliche Dosen gefertigt werden müssen.

Ausgehend von dem eingangs bezeichneten Stand der Technik liegt der Erfindung die Aufgabe zugrunde, eine elektrotechnische Abzweigdose gattungsgemäßer Art zu schaffen, die bei einer geringen Anzahl von zu fertigenden Teilen eine hohe Anwendungsvielfalt ermöglicht, insbesondere auch unterschiedliche Höhenausbildung der Seitenwände der Dose gestattet.

Zur Lösung dieser Aufgabe wird vorgeschlagen, daß das Bodenteil in den Eckbereichen angeformte, parallel zu den Wandungsteilen abragende Dome kreisrunden Querschnitts aufweist, daß die auswechselbaren Wandungsteile jeweils die gesamte Seitenwandung vom Bodenteil bis zum Deckel umfassen und an einer Seitenrandkante eine zylindrische, auf jeweils einen Dom aufsteckbare Hülse und an der anderen Seitenrandkante eine im Querschnitt mindestens etwa einen Viertelkreis bildende Führung aufweisen, die auf eine auf einem Dom aufgeschobene Hülse des benachbarten Wandungsteiles aufschiebbar oder in die eine auf einen Dom aufschiebbare Hülse eines benachbarten Wandungsteiles einschiebbar ist.

Durch diese Ausbildung ist es möglich, unter Verwendung ein und desselben Bodenteiles und ein und desselben Deckels jeweils unterschiedliche Wandungsteile einzusetzen, die bei flachen Dosen beispielsweise eine geringe Höhe oder bei hohen Dosen eine große Höhe aufweisen können, wobei zudem unterschiedliche Seitenwandungsteile für unterschiedliche Einführ- oder Anschlußmittel (Verschraubung, Durchstoßöffnung oder dergleichen) eingesetzt werden können. Zudem erlaubt die im Anspruch gekennzeichnete Ausbildung eine leichte Montage und einen verwechselungsfreien Einsatz der entsprechenden Teile, so daß die Montage für den Benutzer relativ einfach ist. In jedem Falle werden die Fertigungs- und Lagerhaltungskosten durch diese Ausbildung gemindert. Allenfalls ist es erforderlich, bei unterschiedlich hohen Seitenwandungsteilen unterschiedlich lange Befestigungsschrauben einzusetzen, die zur Befestigung des Deckels am Bodenteil und damit zur endgültigen Fixierung der Seitenwandteile dienen.

Eine bevorzugte Weiterbildung wird darin gesehen, daß das Bodenteil im zwischen den Wandungsteilen einschließlich der von diesen umfaßten Domen liegenden inneren Bereich gegenüber dem Randbereich zum Deckel der Abzweigdose hin vorspringend versetzt ist.

Insbesondere in Verbindung damit, ist es vorteilhaft, daß der im unversetzten, in Flucht mit dem Bodenrandbereich befindliche Bereich napfartige, lochbare oder gelochte Vertiefungen aufweist, in die Befestigungsmittel, z.B. Schrauben, einsetzbar sind.

Auf diese Weise ist gewährleistet, daß die Köpfe der Befestigungsmittel, beispielsweise Schrauben, hinter der Flucht des innenliegenden Bereiches des Bodens zurückstehen, so daß Beschädigungen der eingeführten Kabel oder dergleichen ausgeschlossen sind.

Desweiteren ist bevorzugt vorgesehen, daß der unversetzte Bereich mit den Vertiefungen gegenüber der Außenrandkante des Bodenteils von der Seitenwandung nach relativ innen versetzt ist. Hierdurch ist leichte Zugänglichkeit der Vertiefungen für den Einsatz von Befestigungsmitteln, insbesondere Schrauben, von der Dosenstirnseite her gegeben, ohne daß diese Vertiefungen bzw. die Befestigungsmittel durch Wandungsteile oder dergleichen ganz oder teilweise verdeckt wären.

Weiterhin wird als vorteilhaft angesehen, daß an allen Randkanten des Bodenteils im Bereich zwischen der äußeren Auflagefläche des Bodenteils und dem nach relativ innen versetzten Bereich parallel zum Boden verlaufende Einschubnuten ausgebildet sind, in die flache Halter rastbar einschiebbar sind, die außen über die Flucht der Wandungsteile vorragen und in diesem Bereich von Befestigungsmitteln durchgreifbare Befestigungsohren aufweisen.

Durch diese Ausbildung ist es möglich, anstelle der innenliegenden Befestigungspunkte der Dose außenliegende Befestigungspunkte zur Anordnung von Befestigungsschrauben und dergleichen zu benutzen.

Eine weiter bevorzugte Ausbildung wird darin gesehen, daß die Dome hohl ausgebildet sind und aus der Wandung ausgeformte, nach radial innen vorragende Rasten aufweisen, die einen Gewindegang für eine Befestigungsschraube des Deckels bilden.

Diese Ausbildung ist fertigungstechnisch besonders günstig, da in den Domen nicht ein durchgängiges Gewinde ausgebildet werden muß, sondern durch aus der Wandung der Dome freigeschnittene Federarme mit nach relativ innen vorragenden Rasten Gewindegänge gebildet sind, die ein axiales Einschieben einer Befestigungsschraube bis auf Anschlag ermöglichen, wobei lediglich zum Lösen des Deckels diese Befestigungsschrauben mit einem Schraubendreher gedreht werden müssen, zur Befestigung des Deckels aber ein einfaches axiales Einschieben ausreicht.

Desweiteren ist vorteilhaft, wenn das Bodenteil umlaufend einen zu den Wandungsteilen vorstehenden Dichtrand aufweist, auf welchen die Wandungsteile mit einer entsprechenden Nut passend aufschiebbar sind.

Durch diese Ausbildung wird einerseits die Feuchtigkeitsabdichtung verbessert, da sowohl im Verbindungsbereich von Seitenwandteilen und Boden als auch im Verbindungsbereich von Deckel und Seitenwandbereich quasi Labyrinthdichtungen gebildet sind, wobei diese nach Nut und Federart zusammenwirkenden Elemente zudem eine exakte Führung und Positionierung der Teile bei der Montage ermöglichen und sicherstellen.

Dieser Maßnahme ist auch das Merkmal gemäß Anspruch 8 förderlich.

Ausführungsbeispiele der Erfindung sind in den Zeichnungen dargestellt und im folgenden näher beschrieben.

Es zeigt:

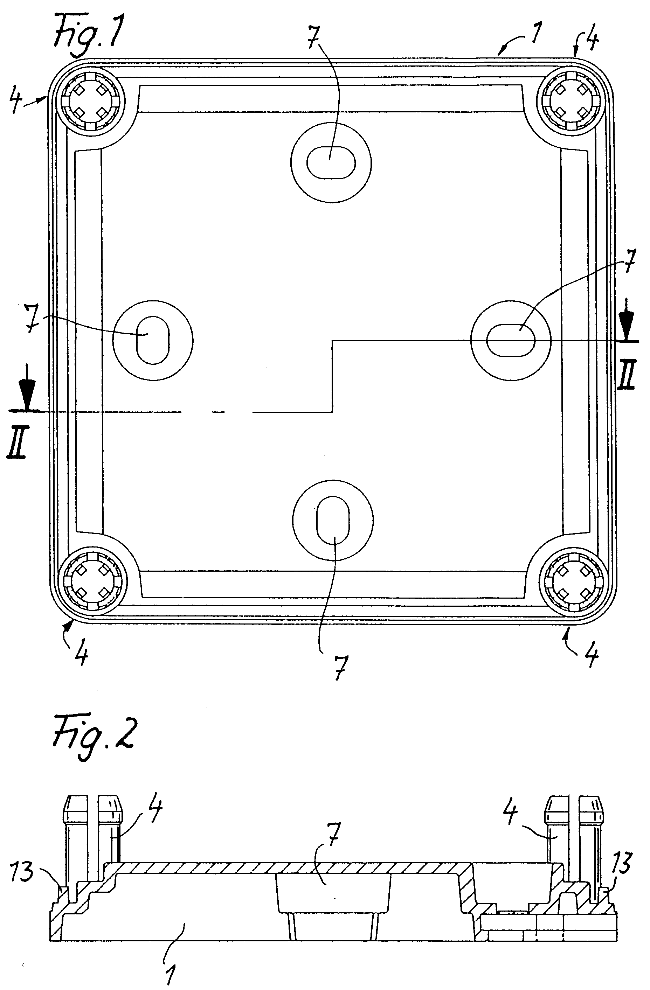

Fig. 1  das Bodenteil einer ersten Ausführungsform in Draufsicht;

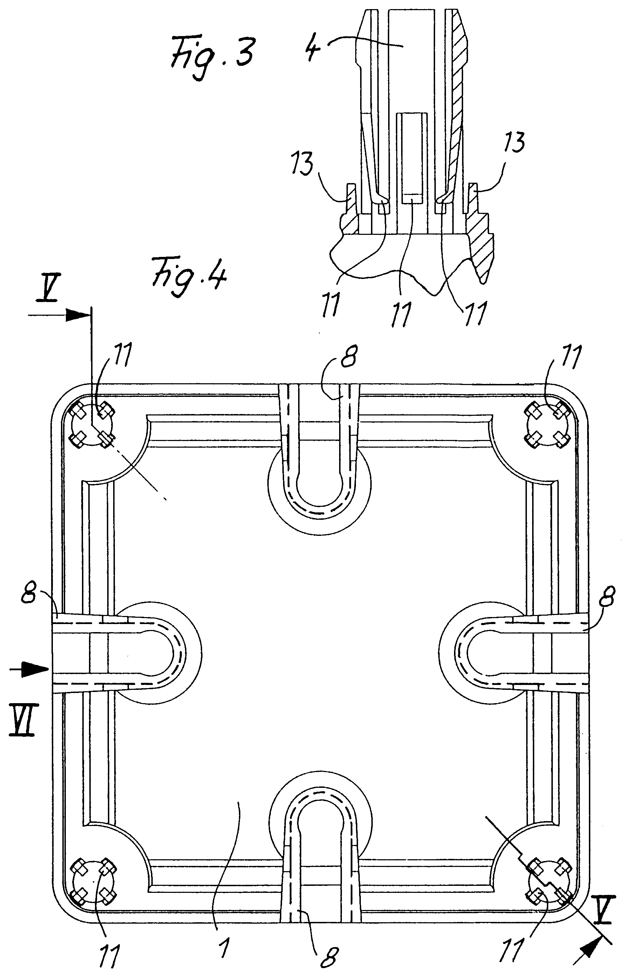

Fig. 2  desgleichen im Schnitt II-II der Figur 1 gesehen;

Fig. 3  eine Einzelheit im Schnitt gesehen;

Fig. 4  das Bodenteil von unten gesehen;

Fig. 5  desgleichen im Schnitt V-V der Figur 4 gesehen;

Fig. 6  eine Einzelheit in Ansicht;

Fig. 7  eine weitere Einzelheit in Draufsicht;

Fig. 8  die Einzelheit in Seitenansicht;

Fig. 9  die Einzelheit im Längsschnitt gesehen;

Fig. 10  das Deckelteil in Unteransicht;

Fig. 11  desgleichen im Schnitt gesehen;

Fig. 12  das Deckelteil von oben gesehen;

Fig. 13  ein Seitenwandteil in Ansicht;

Fig. 14  desgleichen in Draufsicht;

Fig. 15  desgleichen im Schnitt XV-XV der Figur 13 gesehen;

Fig. 16  desgleichen im Schnitt XVI-XVI der Figur 13 gesehen;

Fig. 17  desgleichen im Schnitt XVII-XVII der Figur 15 gesehen.

Die elektrotechnische Abzweigdose zur Aufputz-Installation besteht im wesentlichen aus einem Bodenteil 1, welches in der Draufsicht quadratisch ist, auswechselbar am Bodenteil gehalterten Wandungsteilen 2 sowie einem auf die Stirnseite der Wandungsteile 2 aufsetzbaren, am Bodenteil 1 befestigbaren Deckel 3.

Im Ausführungsbeispiel sind sämtliche Teile ohne zusätzliche elastische Dichtungen zusammengefügt. Die Wandungsteile 2 können unterschiedliche Einführ- bzw. Dichtelemente zur Durch- und Einführung von Kabeln und dergleichen Installationsmaterial aufweisen.

Das Bodenteil 1 weist in den Eckbereichen angeformte, parallel zu den Wandungsteilen 2 abragende Dome 4 kreisrunden Querschitts auf. Die auswechselbaren Wandungsteile 2 umfassen jeweils die gesamte Seitenwandung vom Bodenteil 1 bis zum Deckel 3. An einer Seitenrandkante weisen die Wandungsteile 2 eine zylindrische, auf jeweils einen Dom aufsteckbare Hülse auf, während an der anderen Seitenrandkante des Wandungsteils 2 eine im Querschnitt mehr als einen Viertelkreis bildende Führung 6 angeformt ist, die auf eine auf einen Dom 4 aufgeschobene Hülse 5 des benachbarten Wandungsteiles 2 aufschiebbar ist oder aber in die eine auf einen Dom 4 aufschiebbare Hülse 5 eines benachbarten Wandungsteiles 2 einschiebbar ist.

In der Endmontagelage umfaßt also die Führung 6 die Hülse 5 teilweise.

Das Bodenteil 1 ist im zwischen den Wandungsteilen 2 einschließlich der von diesen umfaßten Dome 4 liegenden, inneren Bereich gegenüber dem Randbereich zum Deckel 3 der Abzweigdose hin vorspringend versetzt. Im unversetzten, in Flucht mit dem Bodenrandbereich befindlichen Bereich sind napfartige, lochbare oder gelochte Vertiefungen 7 vorgesehen, die von Befestigungsmittel, beispielsweise Schrauben durchgreifbar sind. Diese Vertiefungen können in den entsprechend oval markierten Bereichen entweder vorgelocht sein oder aber diese Bereiche sind über Sollbruchstellen ausbrechbar.

Der unversetzte Bereich mit den Vertiefungen 7 ist gegenüber der Außenrandkante des Bodenteiles 1 nach relativ innen versetzt. An allen Randkanten des Bodenteils 1 ist im Bereich zwischen der äußeren Auflagefläche des Bodenteils 1 und dem nach relativ innen versetzten Bereich parallel zum Boden verlaufend an jeder Randkante eine Einschubnut 8 ausgebildet, in die von der Außenseite her flache Halter 9 rastend einschiebbar sind.

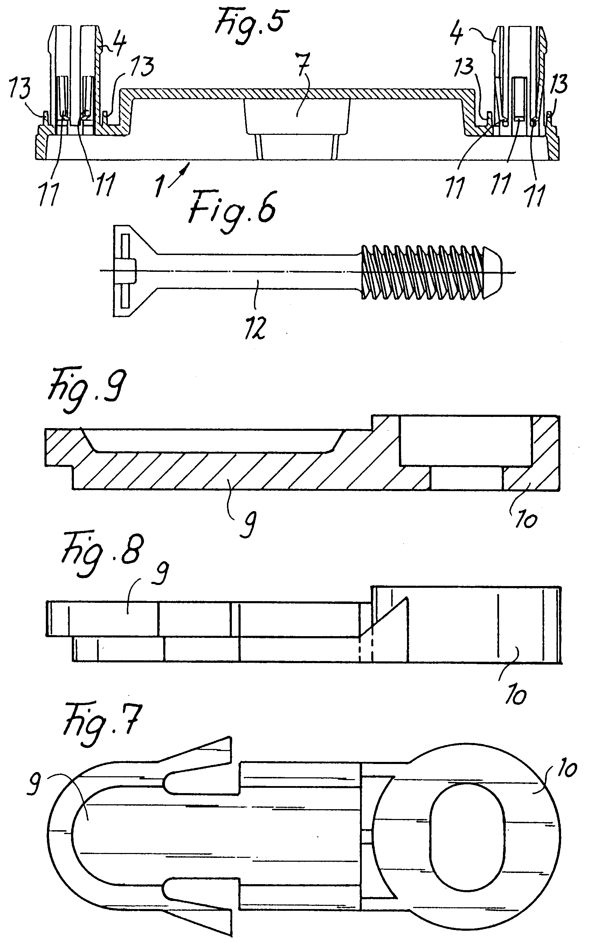

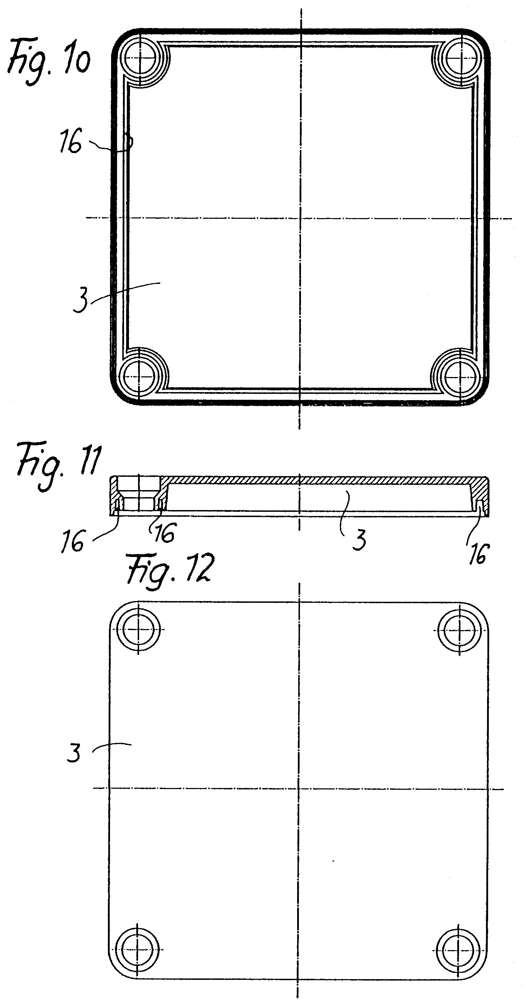

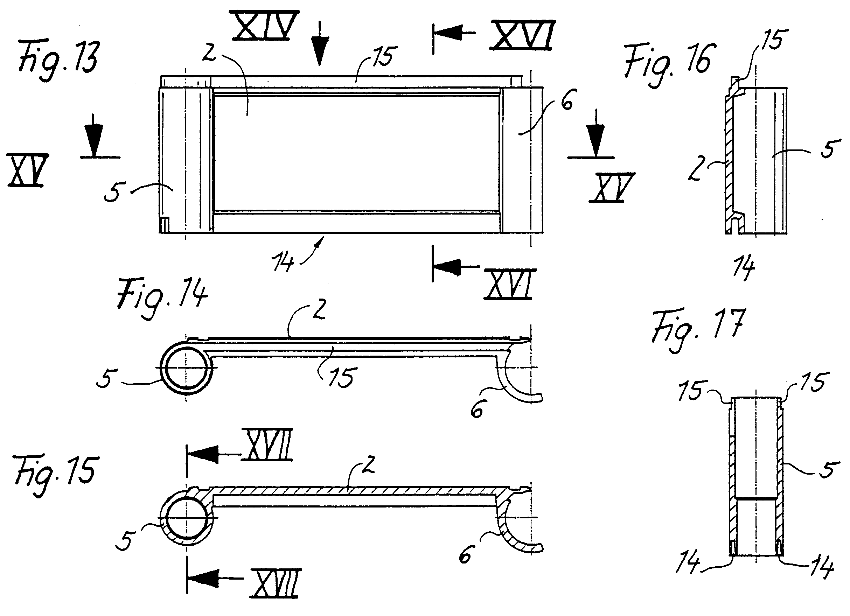

Diese Halter 9 stehen außen über die Flucht der Wandungsteile 2 vor und weisen in diesem Bereich von Befestigungsmitteln (Schrauben) durchgreifbare Befestigungsohren 10 auf. Die Dome 4 sind hohl ausgebildet und weisen aus ihrer Wandung freigeschnittene und ausgeformte, nach radial innen vorragende Rasten 11 auf, die einen Gewindegang für eine Befestigungsschraube 12 des Deckels 3 bilden. Die entsprechende Schraube, die in Figur 6 gezeigt ist, kann durch die entsprechende Lochung des Deckels 3 gesteckt und in den Dom 4 eingeführt werden, wobei die Rasten 11 auffedern und den Weg für die Befestigungsschraube 12 freigeben.

In entgegengesetzter Richtung sperren die Rasten, so daß die Schraube nicht axial herausgezogen werden kann, sondern nur durch Drehung mittels eines Schraubendrehers gelöst werden kann.

Das Bodenteil 1 weist umlaufend einen zu den Wandungsteilen 2 vorstehenden Dichtrand 13 auf, auf welchen die Wandungsteile 2 mit einer entsprechenden Nut 14 passend aufschiebbar sind. Ebenso weisen die Wandungsteile 2 an ihrer oberen Randkante einen vorstehenden Dichtrand 15 auf, welcher in eine Nut 16 an der Innenseite des Deckels 3 eingreift, so daß die Teile miteinander steckverbunden und lagegesichert sind, auch bevor die Befestigungsschrauben 12 ordnungsgemäß angeordnet sind.

Durch diese Ausbildung ist es möglich, die einzelnen Seitenwandteile jeweils den Verwendungszweck entsprechend auszuwählen, so daß unter Verwendung gleicher Standardbauteile unterschiedliche Abzweigdosen zusammengestellt werden können. Aufgrund dieser erfindungsgemäßen Ausbildung ist es auch möglich, unterschiedlich hohe Wandungsteile zu bevorraten und einzusetzen, so daß Dosen mit unterschiedlicher Einbauhöhe aus standardisierten Bauteilen zusammengefügt werden können.

**Patentansprüche**

1. Elektrotechnische Abzweigdose zur Aufputz-Installation, bestehend aus einem quaderförmigen Bodenteil, auswechselbar am Bodenteil gehalterten Wandungsteilen sowie einem auf die Stirnseite der Wandungsteile aufsetzbaren, am Bodenteil befestigbaren Deckel, wobei die zusammenfügbaren Teile (Wandungsteile, Deckel) ohne Dichtung, mit eingelegten Dichtungen oder mit angeformten Dichtungen ausgestattet sind und die auswechselbaren Wandungsteile gleiche oder unterschiedliche Einführ- bzw. Dichtelemente zur Durch- und Einführung von Kabeln und dergleichen Installationsmaterial aufweisen, **dadurch gekennzeichnet,** daß das Bodenteil (1) in den Eckbereichen angeformte, parallel zu den Wandungsteilen (2) abragende Dome (4) kreisrunden Querschnitts aufweist, daß die auswechselbaren Wandungsteile (2) jeweils die gesamte Seitenwandung vom Bodenteil (1) bis zum Deckel (3) umfassen und an einer Seitenrandkante eine zylindrische, auf jeweils einen Dom (4) aufsteckbare Hülse (5) und an der anderen Seitenrandkante eine im Querschnitt mindestens etwa einen Viertelkreis bildende Führung (6) aufweisen, die auf eine auf einen Dom (4) aufgeschobene Hülse (5) des benachbarten Wandungsteiles (2) aufschiebbar oder in die eine auf einen Dom aufschiebbare Hülse (5) eines benachbarten Wandungsteiles (2) einschiebbar ist.

2. Elektrotechnische Abzweigdose nach Anspruch 1, **dadurch gekennzeichnet,** daß das Bodenteil (1) im zwischen den Wandungsteilen (2) einschließlich der von diesen umfaßten Domen (4) liegenden inneren Bereich gegenüber dem Randbereich zum Deckel (3) der Abzweigdose hin vorspringend versetzt ist.

3. Elektrotechnische Abzweigdose nach Anspruch 1 oder 2, **dadurch gekennzeichnet,** daß der im unversetzten, in Flucht mit dem Bodenrandbereich befindliche Bereich napfartige, lochbare oder gelochte Vertiefungen (7) aufweist, in die Befestigungsmittel, z.B. Schrauben, einsetzbar sind.

4. Elektrotechnische Abzweigdose nach einem der Ansprüche 1 bis 3, **dadurch gekennzeichnet,** daß der unversetzte Bereich mit den Vertiefungen (7) gegenüber der Außenrandkante des Bodenteils (1) von der Seitenwandung (2) nach relativ innen versetzt ist.

5. Elektrotechnische Abzweigdose nach einem der Ansprüche 1 bis 4, **dadurch gekennzeichnet,** daß an allen Randkanten des Bodenteils (1) im Bereich zwischen der äußeren Auflagefläche des Bodenteils (1) und dem nach relativ innen versetzten Bereich parallel zum Boden (1) verlaufende Einschubnuten (8) ausgebildet sind, in die flache Halter (9) rastbar einschiebbar sind, die außen über die Flucht der Wandungsteile (2) vorragen und in diesem Bereich von Befestigungsmitteln durchgreifbare Befestigungsohren (10) aufweisen.

6. Elektrotechnische Abzweigdose nach einem der Ansprüche 1 bis 5, **dadurch gekennzeichnet,** daß die Dome (4) hohl ausgebildet sind und aus der Wandung ausgeformte, nach radial innen vorragende Rasten (11) aufweisen, die einen Gewindegang für eine Befestigungsschraube (12) des Deckels bilden.

7. Elektrotechnische Abzweigdose nach einem der Ansprüche 1 bis 6, **dadurch gekennzeichnet**, daß das Bodenteil (1) umlaufend einen zu den Wandungsteilen (2) vorstehenden Dichtrand (13) aufweist, auf welchen die Wandungsteile (2) mit einer entsprechenden Nut (14) passend aufschiebbar sind.

8. Elektrotechnische Abzweigdose nach einem der Ansprüche 1 bis 7, **dadurch gekennzeichnet,** daß die Wandungsteile (2) mit dem Deckel (3) über eine Nut/Feder-Verbindung (15,16) steckverbindbar sind.

Fig.1

Fig.2

Fig. 3

Fig. 4

Fig.5

Fig.6

Fig.9

Fig.8

Fig.7

Fig. 10

16

3

Fig. 11

16    16    3    16

Fig. 12

3

Fig. 13

Fig. 14

Fig. 15

Fig. 16

Fig. 17

EP 0 508 175 A2